(19) Europäisches Patentamt
European Patent Office
Office européen des brevets

(11) **EP 4 776 338 A1**

(12) **EUROPEAN PATENT APPLICATION**
published in accordance with Art. 153(4) EPC

(43) Date of publication:
**15.07.2026 Bulletin 2026/29**

(21) Application number: **24913328.1**

(22) Date of filing: **25.10.2024**

(51) International Patent Classification (IPC):
*H01M 4/134* (2010.01)      *H01M 4/131* (2010.01)
*H01M 4/133* (2010.01)      *H01M 4/36* (2006.01)
*H01M 4/48* (2010.01)       *H01M 4/583* (2010.01)
*H01M 4/62* (2006.01)       *H01M 10/052* (2010.01)
*H01M 4/02* (2006.01)

(52) Cooperative Patent Classification (CPC):
**H01M 4/02; H01M 4/131; H01M 4/133;
H01M 4/134; H01M 4/36; H01M 4/48; H01M 4/583;
H01M 4/62; H01M 10/052**

(86) International application number:
**PCT/KR2024/016373**

(87) International publication number:
**WO 2025/143491 (03.07.2025 Gazette 2025/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.12.2023 KR 20230193252**

(71) Applicant: **SK On Co., Ltd.
Seoul 03161 (KR)**

(72) Inventors:
- **KIM, Hyo-Mi
  Daejeon 34124 (KR)**
- **KWON, Seong-Cho
  Daejeon 34124 (KR)**
- **KIM, Moon-Sung
  Daejeon 34124 (KR)**

- **RYU, Sang-Baek
  Daejeon 34124 (KR)**
- **PARK, Da-Hye
  Daejeon 34124 (KR)**
- **PARK, Sang-Won
  Daejeon 34124 (KR)**
- **BANG, Sang-In
  Daejeon 34124 (KR)**
- **YOOK, Seung-Hyun
  Daejeon 34124 (KR)**
- **JANG, Hwan-Ho
  Daejeon 34124 (KR)**
- **CHUNG, Da-Bin
  Daejeon 34124 (KR)**
- **HAN, Jun-Hee
  Daejeon 34124 (KR)**

(74) Representative: **Stolmár & Partner
Patentanwälte PartG mbB
Blumenstraße 17
80331 München (DE)**

(54) **ANODE FOR LITHIUM SECONDARY BATTERY AND LITHIUM SECONDARY BATTERY INCLUDING SAME**

(57)    An anode for a lithium secondary battery according to an embodiment of the present disclosure includes: an anode current collector; a first anode mixture layer which is formed on at least one surface of the anode current collector and includes a first carbon-based active material; and a second anode mixture layer which is formed on the first anode mixture layer and includes a second carbon-based active material and a silicon-based active material, wherein the first anode mixture layer has a Raman R value according to the following Equation 1, which is smaller than that of the

$$\text{[Equation 1]}$$
$$\text{Raman R} = I_D / I_G$$

second anode mixture layer: Raman $R = I_D / I_G$ wherein $I_D$ is a peak intensity value in an absorption region of 1350 to 1380 $cm^{-1}$, and $I_G$ is a peak intensity value in the absorption region of 1580 to 1600 $cm^{-1}$.

[FIG. 1]

**Description**

Technical Field

The present disclosure relates to an anode for a lithium secondary battery and a lithium secondary battery including the same.

Background Art

Recently, many studies into electric vehicles (EV), which may replace vehicles using fossil fuels such as gasoline and diesel vehicles, one of the main causes of air pollution, have been undertaken, and as the power source of the electric vehicles (EV), a lithium secondary battery having high discharge voltage and output stability has been mainly used. Accordingly, the need for a lithium secondary battery having high energy density is increasing, and the development and research of a high-capacity anode for this are also actively underway.

Disclosure of Invention

Technical Problem

An aspect of the present disclosure is to provide an anode for a lithium secondary battery having high energy density.
Another aspect of the present disclosure is to provide an anode for a lithium secondary battery having a low resistance value.
Another aspect of the present disclosure is to provide an anode for a lithium secondary battery having excellent fast charging characteristics.

Solution to Problem

According to an aspect of the present disclosure, an anode for a lithium secondary battery includes: an anode current collector: a first anode mixture layer which is formed on at least one surface of the anode current collector and contains a first carbon-based active material; and a second anode mixture layer which is formed on the first anode mixture layer and contains a second carbon-based active material and a silicon-based active material, wherein the first anode mixture layer has a Raman R value according to the following Equation 1, which is smaller than that of the second anode mixture layer:

$$[\text{Equation 1}]$$
$$\text{Raman } R = I_D / I_G$$

wherein $I_D$ is a peak intensity value in an absorption region of 1350 to 1380 $cm^{-1}$, and $I_G$ is a peak intensity value in an absorption region of 1580 to 1600 $cm^{-1}$.
In some embodiments, the first anode mixture layer may not include the silicon-based active material.
In some embodiments, the first anode mixture layer may have an OI value according to the following Equation 2, which is larger than that of the second anode mixture layer:

$$[\text{Equation 2}]$$
$$OI = I_{004} / I_{110}$$

wherein OI is a crystal orientation index according to XRD measurement, $I_{004}$ is a peak intensity of a (004) plane in XRD measurement of the anode mixture layer, and $I_{110}$ is a peak intensity of a (110) plane in XRD measurement of the anode mixture layer.
In some embodiments, the first anode mixture layer may have the OI value of 9 to 18.
In some embodiments, the second anode mixture layer may have the OI value of 1 to 8.
In some embodiments, the first anode mixture layer may have the Raman R value of 0.15 to 0.27.

In some embodiments, the second anode mixture layer may have the Raman R value of 0.281 to 0.55.

In some embodiments, the first carbon-based active material and the second carbon-based active material may independently of each other include artificial graphite.

In some embodiments, the first carbon-based active material may further include natural graphite.

In some embodiments, the first carbon-based active material may not be surface-coated.

In some embodiments, the second carbon-based active material may be surface-coated with at least one selected from the group consisting of hard carbon, soft carbon, heavy oil, and pitch.

According to another aspect of the present disclosure, a lithium secondary battery includes the anode for a lithium secondary battery according to any one of the embodiments described above.

Advantageous Effects of Invention

According to an aspect of the present disclosure, an anode for a lithium secondary battery having excellent energy density may be provided.

According to another aspect of the present disclosure, an anode for a lithium secondary battery having excellent fast charging characteristics may be provided.

According to another aspect of the present disclosure, a resistance value of the anode for a lithium secondary battery may be lowered.

Brief Description of Drawings

FIG. 1 is a drawing schematically showing a basal plane corresponding to a basal plane in a carbon-based active material having a parallel stacked structure and an edge plane formed by gathering edges of each basal plane.

FIG. 2 is a schematic diagram showing the structure of an anode for a lithium secondary battery according to an embodiment.

Best Mode for the Invention

Hereinafter, unless otherwise particularly defined in the present specification, it will be understood that when it is described that a part such as a layer, a film, a thin film, a region, or a plate is "on" or "above" another part, it may include not only the case of being "directly on" the other part but also the case of intervening another part therebetween.

In the present specification, "orientation" of a mixture layer and an active material refers to characteristics shown as a "crystal orientation index (OI)" determined by a peak intensity ratio which is a ratio between a peak intensity ($I_{004}$) of a (004) plane and a peak intensity ($I_{110}$) of a (110) plane according to XRD measurement. For example, as the OI values of the mixture layer and the active material are smaller, they refer to a low-orientation mixture layer and active material having small orientation, and as the OI values are larger, they refer to a high-orientation mixture layer and active material having large orientation.

In order to implement a secondary battery having a high capacity and high energy density, according to an embodiment, a silicon-based active material having a higher discharge capacity (1500 mAh/g) than that of graphite (350 mAh/g) may be applied to an anode for a lithium secondary battery. When the silicon-based active material having a high discharge capacity as such is applied with a carbon-based active material such as graphite, the loaded weight (LW) of an anode active material layer may also be lowered, and energy density may be further increased.

However, since a silicon-based active material has a slower lithium ion diffusion rate and a higher volume expansion rate than the carbon-based active material, there is a difficulty in securing the fast charging characteristic, the life characteristic, and the like of the anode including the silicon-based active material at an excellent level. According to an embodiment, the fast charging characteristic may be improved by including a low-orientation carbon-based active material having a low crystal orientation index (OI) value with a silicon-based active material. However, since it is difficult to roll the low-orientation carbon-based active material to a high density, it may be difficult to improve the energy density of an anode to a high level even when using the carbon-based active material.

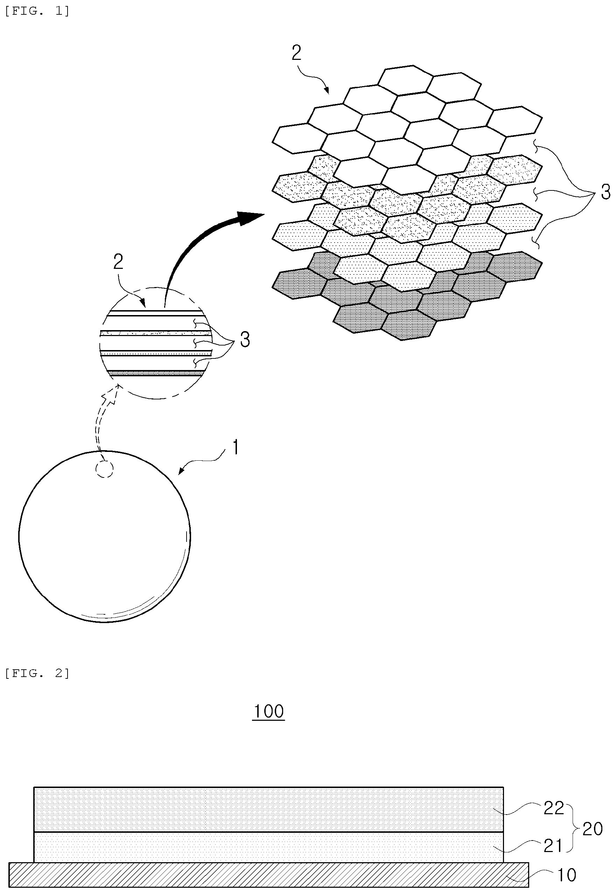

In this regard, according to an embodiment, the problems described above may be substantially solved. Referring to FIGS. 1 and 2, the embodiments of the present disclosure will be described in detail.

FIG. 1 is a drawing schematically showing a basal plane corresponding to a basal plane in a carbon-based active material having a parallel stacked structure and an edge plane formed by gathering edges of each basal plane.

FIG. 2 is a schematic diagram showing the structure of an anode for a lithium secondary battery according to an embodiment.

**Anode for a lithium secondary battery**

An anode 100 for a lithium secondary battery according to an embodiment may include: an anode current collector 10, a first anode mixture layer 21 formed on at least one surface of the anode current collector 10, and a second anode mixture layer 22 formed on the first anode mixture layer 21.

The first anode mixture layer 21 may include a first carbon-based active material. The second anode mixture layer 22 may include a second carbon-based active material and a silicon-based active material.

The first anode mixture layer 21 may have a Raman R value according to the following Equation 1, which is smaller than that of the second anode mixture layer 22:

$$[\text{Equation 1}]$$
$$\text{Raman R} = I_D / I_G$$

wherein $I_D$ is a peak intensity value in an absorption region of 1350 to 1380 cm$^{-1}$, and $I_G$ is a peak intensity value in an absorption region of 1580 to 1600 cm$^{-1}$.

The Raman R value is a parameter representing the relative crystallinity of a material, the $I_D$ value is the peak intensity of a region related to an amorphous state, and the $I_G$ value is the peak intensity of a region related to a crystalline state. Therefore, it means that the larger the Raman R value is, the lower the crystallinity of a material is, and the smaller the Raman R value is, the higher the crystallinity of a material is. The peak intensity may refer to a maximum peak height in a specific wave number range.

Specifically, the Raman R value of the first anode mixture layer 21 may be about 0.15 to about 0.27, and the Raman R value of the second anode mixture layer 22 may be about 0.281 to about 0.55. More specifically, the Raman R value of the first anode mixture layer 21 may be about 0.16 to about 0.26, and the Raman R value of the second anode mixture layer 22 may be about 0.29 to about 0.3.

When the Raman R values of the first anode mixture layer 21 and the second anode mixture layer 22 are adjusted to the range described above, in the anode of a multilayer structure, a high-density anode mixture layer having higher crystallinity and lower porosity may be disposed in a lower layer to improve the energy density of the anode, and a low-density anode mixture layer having lower crystallinity and higher porosity may be disposed in an upper layer to facilitate lithium ion entry and exit and improve the fast charging characteristics of the anode.

The first anode mixture layer 21 may have an OI value according to the following Equation 2, which is larger than that of the second anode mixture layer 22:

$$[\text{Equation 2}]$$
$$\text{OI} = I_{004} / I_{110}$$

wherein OI is a crystal orientation index according to XRD measurement, $I_{004}$ is a peak intensity of a (004) plane in XRD measurement of the anode mixture layer, and $I_{110}$ is a peak intensity of a (110) plane in XRD measurement of the anode mixture layer.

The anode 100 for a lithium secondary battery having a multilayer structure may include an anode mixture layer 20 on the anode current collector 10, and the anode mixture layer 20 may include the first anode mixture layer 21 and the second anode mixture layer 22. The anode mixture layer 21 may be an active material layer (lower layer) on one surface adjacent to the anode current collector 10, and the second anode mixture layer 22 may be an active material layer (upper layer) which is formed on the anode mixture layer 21 and is relatively separated from the anode current collector 10 and adjacent to an electrolyte.

In the anode 100 for a lithium secondary battery according to an embodiment, the first anode mixture layer 21 and the second anode mixture layer 22 may include the first carbon-based active material and the second carbon-based active material which have different orientations from each other, respectively. Specifically, the first anode mixture layer 21 which is the lower layer may be a high-orientation anode mixture layer having a relatively large crystal orientation index (OI) value by including the high-orientation first carbon-based active material having a relatively large crystal orientation index (OI) value, and the second anode mixture layer 22 which is the upper layer may be a low-orientation anode mixture layer having a relatively small crystal orientation index (OI) value by including the low-orientation second carbon-based active material having a relatively small crystal orientation index (OI) value. Hereinafter, the crystal orientation index (OI) and the like of the anode mixture layer and the carbon-based active material will be described in more detail.

The crystal orientation index (OI) refers to a crystal orientation index (OI) value, as a ratio between a peak intensity ($I_{004}$) shown on the (004) plane and a peak intensity ($I_{110}$) shown on the (110) plane in the XRD measurement of the anode mixture layer. In addition, the crystal orientation index (OI) also refers to a crystal orientation index (OI) value, as a ratio between a peak intensity ($I_{004}$) shown on the (004) plane and a peak intensity ($I_{110}$) shown on the (110) plane in the XRD measurement of the active material. Specifically, $I_{004}$ may be a peak intensity value of the (004) plane shown at an angle of $2\theta = 54.7 \pm 0.2°$ in the XRD measurement of the anode mixture layer and the active material using a CuK$\alpha$ ray, and $I_{110}$ may be a peak intensity value of the (110) plane shown at an angle of $2\theta = 77.5 \pm 0.2°$ in the XRD measurement of the anode mixture layer and the active material using a CuK$\alpha$ ray. In general, the peak intensity value refers to a peak height value or a peak integral area value, and the I004 and I110 may be calculated as a peak integral area value.

Meanwhile, referring to FIG. 1, a carbon-based active material 1 such as artificial graphite generally includes carbon layers in which hexagonal rings composed of 6 carbon atoms are connected in a plane manner, and the carbon layers are stacked parallel to each other. In the carbon-based active material 1 as such, a basal plane 2 corresponds to a basal plane in the carbon layer having a structure stacked in parallel, and an edge plane 3 refers to an edge plane formed by gathering edges of each basal plane.

Intercalation and deintercalation phenomena in which lithium ions are stored in and released from the carbon-based active material 1 during a secondary battery charging and discharging process are performed mainly through the edge plane 3. Therefore, as the number of edge planes 3 increases, it is easier to intercalate and deintercalate lithium ions during the charging process, and the fast charging characteristic may be better.

In this regard, the crystal orientation index (OI) value determined by the XRD measurement of the carbon-based active material 1 refers to a peak intensity of the (110) plane compared to the (004) plane, and as the OI value of the carbon-based active material 1 is smaller, the carbon-based active material may have a structure having a larger number of the edge planes 3 as compared to the basal plane 2. This is considered to be due to the fact that as the crystal orientation index (OI) value is smaller, the disorder of crystal arrangement is increased, and the number of the edge planes 3 through which lithium ions enter and exit is increased. Therefore, as the carbon-based active material included in the anode is a low-orientation carbon-based active material having a smaller crystal orientation index (OI) value, lithium ions enter and exit more easily through more edge planes 3, and the fast charging characteristics may be excellent.

However, as the orientation is lower, the hardness of the carbon-based active material is increased, and there may be substantial difficulty in rolling the low-orientation carbon-based active material to high density. Accordingly, it is difficult to increase the rolling density of the anode including the low-orientation carbon-based active material, and there is a limitation in manufacturing an anode for a lithium secondary battery having high energy density.

Thus, the anode 100 for a lithium secondary battery according to an embodiment having a multilayer structure may include carbon-based active materials having different orientations from each other for each layer and have excellent fast charging characteristics, energy density, and the like. Specifically, the first anode mixture layer 21 includes the first carbon-based active material, the second anode mixture layer 22 includes the second carbon-based active material, and the first carbon-based active material may have a larger OI value than the second carbon-based active material. Accordingly, the first anode mixture layer 21 may have a larger OI value than the second anode mixture layer 22.

That is, since the first anode mixture layer 21 as a lower layer is a high-orientation anode mixture layer having a larger crystal orientation index (OI) value, rolling to high density is allowed, and thus, the anode 100 may secure high energy density. In addition, the second anode mixture layer as an upper layer is a low-orientation anode mixture layer having a smaller crystal orientation index (OI) value, it is easy for lithium ions to enter and exit the anode mixture layer adjacent to an electrolyte where the lithium ions are present in a large amount, and the anode 100 may secure excellent fast charging characteristics.

Specifically, the first anode mixture layer 21 may have the OI value of about 9 to about 18. When the first anode mixture layer 21 has the OI value of less than 9, the lower anode mixture layer having low orientation has high hardness and may not be rolled well, and there may be a difficulty in improving the energy density of the anode. When the OI value of the first anode mixture layer 21 is more than 18, it becomes difficult for lithium ions to intercalate and deintercalate the lower anode mixture layer having high orientation, and the fast charging characteristics of the anode may be reduced.

Specifically, the second anode mixture layer 22 may have the OI value of about 1 to about 8. When the second anode mixture layer 22 has the OI value of less than 1, the upper anode mixture layer having low orientation has high hardness and may not be rolled well, and there may be a difficulty in improving the energy density of the anode. When the OI value of the second anode mixture layer 22 is more than 8, it becomes difficult for lithium ions to intercalate and deintercalate the upper anode mixture layer having high orientation, and the quick charging characteristics of the anode may be reduced.

More specifically, the first anode mixture layer 21 may have the OI value of about 13 to about 16, and the second anode mixture layer 22 may have the OI value of about 3 to about 5.

When the crystal orientation index (OI) values of the first anode mixture layer 21 and the second anode mixture layer 22 are within the range described above, respectively, the orientation, the hardness, and the like of the carbon-based active material included in each anode mixture layer in the anode having a multilayer may be appropriately adjusted within the ranges different from each other, and thus, the fast charging characteristic, the energy density, and the like of the anode may all be excellent.

For example, the first carbon-based active material and the second carbon-based active material may be independent of each other one or more carbon-based active materials selected from artificial graphite, natural graphite, hard carbon, soft carbon, carbon black, acetylene black, Ketjen black, Super P, graphene, and fibrous carbon.

Specifically, considering the ease of adjustment of the orientation and the like of the anode mixture layer and the active material, the first carbon-based active material and the second carbon-based active material may, independently of each other, include artificial graphite.

The first carbon-based active material may further include natural graphite. Since the first carbon-based active material includes natural graphite, electrode adhesive strength and resistance characteristics may be improved.

In an example embodiment, the first carbon-based active material may include artificial graphite and natural graphite, and the second carbon-based active material may include only artificial graphite.

The content by weight of the artificial graphite in the first carbon-based active material may be equivalent to or more than the content by weight of the natural graphite. Specifically, a weight ratio between the artificial graphite and the natural graphite in the first carbon-based active material may be 5:5 to 9:1. More specifically, the weight ratio between the artificial graphite and the natural graphite in the first carbon-based active material may be 6:4 to 8:2. When the weight ratio between the artificial graphite and the natural graphite in the first carbon-based active material is within the range described above, both the energy density and the fast charging characteristic of the anode may be improved.

In an example embodiment, the first carbon-based active material and the second carbon-based active material may include only artificial graphite, respectively.

Meanwhile, the second carbon-based active material may be surface-coated with at least one selected from the group consisting of hard carbon, soft carbon, heavy oil, and pitch. For example, the artificial graphite included in the second carbon-based active material may be surface-coated with at least one selected from the group consisting of soft carbon, heavy oil, and pitch. Accordingly, the hardness of the second carbon-based active material is improved, and the fast charging characteristic and the resistance characteristic of the anode may be excellent.

The weight ratio between the artificial graphite and the natural graphite in the first anode mixture layer may be about 5:5 to about 9:1. More specifically, the weight ratio between the artificial graphite and the natural graphite in the first anode mixture layer may be about 6:4 to about 8:2. When the weight ratio between the artificial graphite and the natural graphite in the first anode mixture layer is within the range described above, the electrode adhesive strength and the resistance characteristic may be improved. When the weight ratio between the artificial graphite and the natural graphite in the first anode mixture layer is more than the range described above, the life characteristic and the fast charging characteristic of the anode may be poor.

The first carbon-based active material may not be surface-coated. Specifically, since artificial graphite included in the first carbon-based active material is not surface-coated with hard carbon, soft carbon, heavy oil, or pitch, it may have less side reaction with an electrolyte solution, and a high-temperature storage characteristic of the anode may be excellent. When the first carbon-based active material is surface-coated with at least one selected from the group consisting of hard carbon, soft carbon, heavy oil, and pitch, it is difficult to roll the anode mixture layer to high density, and the energy density of the anode may be reduced.

The content of the first carbon-based active material in the first anode mixture layer 21 may be about 90 to about 98 wt%. In addition, the content of the second carbon-based active material in the second anode mixture layer 22 may be about 60 to about 90 wt%.

The content of the silicon-based active material in the second anode mixture layer 22 may be about 10 to about 40 wt%. Specifically, the content of the silicon-based active material in the second anode mixture layer 22 may be about 10 to about 20 wt%.

Meanwhile, the first anode mixture layer 21 may include only the first carbon-based active material as an active material. That is, the first anode mixture layer 22 may not include the silicon-based active material.

When the first anode mixture layer 21 does not include the silicon-based active material, and the content, ratio, and the like of the silicon-based active material in the second anode mixture layer 22 are within the range described above, the first anode mixture layer 21 formed on one surface adjacent to the anode current collector 10 does not include the silicon-based active material, and thus, problems such as deintercalation of an active material layer due to volume expansion are prevented from occurring, and the life characteristic and the like of the anode 100 may be improved. In addition, since the second anode mixture layer 22 includes the silicon-based active material having a lower diffusion rate of lithium ions than the carbon-based active material in the range described above, the anode 100 may secure a high-capacity characteristic, a fast charging characteristic, and the like.

Though the silicon-based active material included in the second anode mixture layer 22 is not particularly limited, it may be properly selected from a silicon oxide-based active material which is a compound represented by a chemical formula of $SiO_x$ (0<x<2), a silicon carbide-based active material such as a Si-C composite which is a compound represented by a chemical formula of SiC, and a combination thereof, depending on the anode design purpose of a multilayer structure and the like.

In general, a Si-C composite has a higher capacity and a lower resistance characteristic than a conventional silicon oxide-based active material, but causes a short circuit (isolation) phenomenon between the SiC composite and the carbon-based active material due to the structural collapse of the active material during the charging/discharging process, thereby reducing the life characteristic of a battery. Therefore, high energy density may also be secured simultaneously by applying the Si-C composite having high capacity and low resistance characteristics to the second anode mixture layer 22. That is, the second anode mixture layer 22 may include a silicon carbide-based active material as a silicon-based active material.

The first anode mixture layer 21 may further include a first conductive material, and the second anode mixture layer 22 may further include a second conductive material. The first conductive material and the second conductive material are used for imparting conductivity to an electrode, maintaining the structure of an electrode, and the like, and may be those having conductivity without causing a side reaction with other elements of a secondary battery. For example, they may be graphite such as natural graphite or artificial graphite; carbon-based materials such as carbon black, acetylene black, Ketjen black, channel black, furnace black, lamp black, thermal black, and carbon fiber; metal powder or metal fiber such as copper, nickel, aluminum, and silver; conductive whisker such as zinc oxide and potassium titanate; conductive metal oxides such as titanium oxide; conductive polymers such as a polyphenylene derivative, or the like, and these may be used alone or in combination of two or more. Specifically, the first conductive material and the second conductive material may include carbon nanotubes (CNT), respectively. Since the carbon nanotubes (CNT) have higher electron mobility than carbon black and the like which are conventional conductive materials, they may implement high energy density with a small amount, have high strength and the like due to their stable structure, and substantially relieve volume expansion of the silicon-based active material. Therefore, when the first conductive material and the second conductive material include the carbon nanotubes (CNT), the energy density, life characteristic, resistance characteristic, and the like of the anode 100 may be better.

The first conductive material and the second conductive material may be different from each other. Specifically, in the anode 100 for a lithium secondary battery, conductive materials different from each other may be applied to each layer of the anode having a multilayer structure, respectively. In this regard, the characteristics and the like of the first conductive material and the second conductive material may be adjusted as follows.

The Raman R value of the first conductive material may have a larger Raman R value than the second conductive material. Since the detailed description of the Raman R value is duplicated from the above description, it will be omitted.

The Raman R value of the first conductive material may be about 0.1 to about 1.8, and the Raman R value of the second conductive material may be about 0.01 to about 0.09. Specifically, the Raman R value of the first conductive material may be about 0.3 to about 1.0, and the Raman R value of the second conductive material may be about 0.01 to about 0.05.

The first conductive material may include multi-walled carbon nanotubes (MWCNT), and the second conductive material may include single-walled carbon nanotubes (SWCNT).

When the Raman R value, the type, and the like of the first conductive material and the second conductive material are applied as described above, dispersibility in the first anode mixture layer 21 adjacent to the anode current collector 10 having higher energy density is lower, a conductive path between the current collector and the electrode layer is formed by including the conductive material having a large particle size, and also micropores may be formed in an electrode layer to increase ion conductivity. In addition, a conductive material having high crystallinity and excellent conductivity, dispersibility, and the like is included in the second anode mixture layer 22 having relatively lower energy density to form and maintain a conductive path in an electrode layer, thereby further improving the fast charging characteristic.

The content of the first conductive material in the first anode mixture layer may be equivalent to or more than the content of the second conductive material in the second anode mixture layer. Specifically, the content of the first conductive material in the first anode mixture layer may be about 0.3 to about 5 wt%, and the content of the second conductive material in the second anode mixture layer may be about 0.01 to about 0.3 wt%. Specifically, the content of the first conductive material in the first anode mixture layer may be about 0.3 to about 3 wt%, about 0.35 to about 1 wt%, or about 0.4 wt% to about 0.6 wt%, and the content of the second conductive material in the second anode mixture layer may be about 0.05 to about 0.15 wt%.

When the content characteristics of the first conductive material and the second conductive material are adjusted as described above, the content of the conductive material in the first anode mixture layer 21 formed on one surface adjacent to the anode current collector 10 is adjusted to be relatively high, thereby increasing contact points between the anode current collector 10 and the first anode mixture layer 21. When the contact points are increased, resistance between the anode 100 and the anode current collector 10 may be decreased, and even when the anode 100 expands during its use, the contact points between the anode current collector 10 and the anode may be maintained. In addition, the content of the conductive material in the second anode mixture layer 22 may be adjusted to be relatively low, thereby decreasing the content of the conductive material included in the entire anode 100 to secure economic feasibility, of course, and also the content of the active material in the anode mixture layer 20 may be increased, thereby implementing the anode 100 having the same energy density with a relatively low loaded weight. In addition, when an excessive amount of the conductive material is included in the upper layer, the occurrence of a problem of reducing the interfacial resistance and the life characteristic of the anode 100 may be relieved.

The first anode mixture layer 21 and the second anode mixture layer 22 may further include a binder, respectively.

The binder is not particularly limited as long as it serves to attach the constituents in the anode mixture layer 20 to each other well and attach the anode mixture layer 20 to the anode current collector 10 well, and for example, may be at least one rubber-based binder selected from the group consisting of styrene-butadiene rubber (SBR), fluorine-based rubber, ethylene propylene rubber, butyl acrylate rubber, butadiene rubber, isoprene rubber, acrylonitrile rubber, acryl-based rubber, and silane-based rubber; cellulose-based binders such as carboxymethyl cellulose (CMC), hydroxypropyl methyl cellulose, methyl cellulose, or alkali metal salts thereof; aqueous polymer-based binders such as polyacrylic acid (PAA)-based binders, polyvinyl alcohol (PVA) -based binders, and polyvinyl alcohol (PVA)-polyacrylic acid copolymer (PAA copolymer)-based binders; and a combination thereof. Specifically, the binder may be styrene-butadiene rubber (SBR), carboxymethyl cellulose (CMC), and a combination thereof.

The content of the binder in the first anode mixture layer 21 may be equivalent to or more than the content of the binder in the second anode mixture layer 22. Specifically, a ratio between the content of the binder in the first anode mixture layer 21 and the content of the binder in the second anode mixture layer 22 may be about 9:1 to about 5:5. More specifically, a ratio between the content of the binder in the first anode mixture layer 21 and the content of the binder in the second anode mixture layer 22 may be about 8.5:1.5 to about 7:3.

When the content of the binder is too low, the adhesive strength of the first anode mixture layer 21 adjacent to the anode current collector 10 is excessively reduced, so that problems such as scrap occurrence and mixture layer detachment may occur in the notching process. However, when the content of the binder is too high overall in the anode 100, electrical resistance may be increased to reduce battery characteristics. Accordingly, when the content of the binder included in the first anode mixture layer 21 as a lower layer is adjusted to be relatively high, the content of the binder may be lowered overall in the anode while substantially relieving the occurrence of the problems, and thus, an increase in electrical resistance may also be relieved.

The content of the binder in the first anode mixture layer 21 may be about 2.5 to about 5.0 wt%. In addition, the content of the binder in the second anode mixture layer 22 may be about 0.1 to about 2.5 wt%. Specifically, the content of the binder in the first anode mixture layer 21 may be about 3.0 to about 4.0 wt%, and the content of the binder in the second anode mixture layer 22 may be about 1.0 to about 2.0 wt%.

When the content of the binder in each anode mixture layer is within the range described above, the anode 100 having a multilayer structure may have excellent flexibility, adhesive strength, and the like, and thus, problems such as electrode detachment in the process or cracking or electrode detachment in the charging/discharging process may be substantially relieved, and low resistance characteristics may also be secured.

A loaded weight (LW) ratio between the first anode mixture layer 21 and the second anode mixture layer 22 may be about 2:8 to about 8:2. In addition, the loaded weight of the first anode mixture layer 21 may be about 1.5 to about 9.5 mg/cm$^2$, and the loaded weight of the second anode mixture layer 22 may be about 1.5 to about 9.5 mg/cm$^2$.

The loaded weight (LW) refers to the amount of the anode mixture layer 20 formed on the anode current collector 10, that is, a layer including the active material, the binder, the conductive material, and the like, formed on the anode current collector 10, expressed in units of weight per area. Herein, the area is based on the area of the anode current collector 10, and the weight is based on the total weight of the formed anode current collector 20.

When the loaded weight (LW) value, the ratio, and the like of the first anode mixture layer 21 and the second anode mixture layer 22 are within the ranges described above, the anode 100 having a multilayer structure having all excellent capacity characteristics, life characteristics, fast charging characteristics, and the like may be provided.

As the anode current collector 10, any one selected from the group consisting of a copper foil, a nickel foil, a stainless steel foil, a titanium foil, a nickel foam, a copper foam, a polymer substrate coated with a conductive metal, and a combination thereof may be appropriately used.

A method for manufacturing the anode 100 for a lithium secondary battery is not particularly limited, but may be performed by (1) a "twice coating" process of applying a slurry on the upper and lower layers in order, (2) a "simultaneous coating" process applying a slurry on the upper and lower layers simultaneously, or the like. For example, the "twice coating" process may be performed by applying a first anode slurry including a first solvent, the first carbon-based active material, a silicon-based active material, a binder, and the first conductive material on the anode current collector 10 by a method such as bar coating, casting, or spraying and drying the slurry to form a first anode mixture layer 21 at about 70 to about 100°C, and then applying a second anode slurry including a second solvent, the second carbon-based active material, a silicon-based active material, a binder, and the second conductive material on the first anode mixture layer 21 by a method such as bar coating, casting, or spraying and drying the slurry at about 70 to about 100°C.

The solvent may be, for example, dimethyl sulfoxide (DMSO), isopropyl alcohol, N-methyl pyrrolidone (NMP), acetone, water, or the like, and an amount of the solvent used is enough to have viscosity to allow the active material, the conductive material, and the binder to be dissolved or dispersed, and then an excellent thickness uniformity to be shown when application for forming the anode mixture layer, considering an application thickness, a manufacturing yield, and the like of the composition for forming an anode mixture layer.

**Lithium secondary battery**

The lithium secondary battery according to an embodiment may include the anode for a lithium secondary battery described above. For example, the lithium secondary battery may include a cathode, an anode, and a separator interposed between the cathode and the anode. The anode may be an anode for a secondary battery according to any one of the embodiments described above.

The cathode may include a cathode current collector and a cathode mixture layer disposed on at least one surface of the cathode current collector. The cathode current collector may include stainless steel, nickel, aluminum, titanium, or an alloy thereof. The cathode current collector may also include aluminum or stainless steel which is surface-treated with carbon, nickel, titanium, or silver. The cathode current collector may be, for example, 10 to 50 $\mu$m, but is not limited thereto.

The cathode mixture layer may include a cathode active material. The cathode active material may include a compound capable of reversibly intercalating and deintercalating lithium ions.

According to illustrative example embodiments, the cathode active material may include a lithium-nickel metal oxide. The lithium-nickel metal oxide may further include at least one of cobalt (Co), manganese (Mn), and aluminum (Al).

In some example embodiments, the cathode active material or the lithium-nickel metal oxide may include a layered structure or a crystal structure represented by the following Chemical Formula 1:

$$[\text{Chemical Formula 1}] \qquad \text{Li}_x\text{Ni}_a\text{M}_b\text{O}_{2+z}$$

wherein $0.9 \leq x \leq 1.2$, $0.6 \leq a \leq 0.99$, $0.01 \leq b \leq 0.4$, and $-0.5 \leq z \leq 0.1$. As described above, M may include Co, Mn, and/or Al.

The chemical structure represented by Chemical Formula 1 shows a bonding relationship included in the layered structure or the crystal structure of the cathode active material, but other additional elements are not excluded. For example, M includes Co and/or Mn, and Co and/or Mn may be provided as a main active element of the cathode active material with Ni. Chemical Formula 1 is provided for expressing the bonding relationship of the main active elements and should be understood as a formula covering the introduction of or substitution with an additional element.

In an example embodiment, auxiliary elements which are added to the main active elements to enhance the chemical stability of the cathode active material or the layered structure/crystal structure may be further included. The auxiliary element may be incorporated into the layered structure/crystal structure to form a bond, and in this case, it should also be understood to be included in the range of the chemical structure represented by Chemical Formula 1.

The auxiliary element may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, or Zr. The auxiliary element may act as, for example, an auxiliary active element which contributes to the capacity/output activity of the cathode active material with Co or Mn, like Al.

For example, the cathode active material or the lithium-nickel metal oxide may include a layered structure or a crystal structure represented by the following Chemical Formula 1-1:

$$[\text{Chemical Formula 1-1}] \qquad \text{Li}_x\text{Ni}_a\text{M1}_{b1}\text{M2}_{b2}\text{O}_{2+z}$$

wherein M1 includes Co, Mn, and/or Al, M2 includes the auxiliary elements described above, and $0.9 \leq x \leq 1.2$, $0.6 \leq a \leq 0.99$, $0.01 \leq b1+b2 \leq 0.4$, and $-0.5 \leq z \leq 0.1$.

The cathode active material may further include a coating element or a doping element. For example, elements which are substantially identical or similar to the auxiliary elements described above may be used as a coating element or a doping element. For example, among the elements described above, a single element or a combination of two or more elements may be used as a coating element or a doping element.

The coating element or the doping element may be present on the surface of the lithium-nickel metal oxide particles, or may penetrate through the surface of the lithium-nickel metal composite oxide particles and be included in the combined structure represented by Chemical Formula 1 or Chemical Formula 1-1.

The cathode active material may include a nickel-cobalt-manganese (NCM)-based lithium oxide. In this case, an NCM-based lithium oxide having an increased nickel content may be used.

Ni may be provided as a transition metal related to the output and capacity of the lithium secondary battery. Therefore, as described above, since a high-content (high-Ni) composition is adopted into the cathode active material, a high-capacity cathode and a high-capacity lithium secondary battery may be provided.

However, as the content of Ni increases, the long-term preservation stability and the life stability of the cathode or the secondary battery may be relatively reduced, and a side reaction with the electrolyte may be increased. However, according to illustrative example embodiments, the life stability and the capacity retention characteristics may be improved by Mn, while maintaining the electrical conductivity, by including Co.

The content of Ni in the NCM-based lithium oxide (for example, the mole fraction of nickel of the total moles of nickel, cobalt, and manganese) may be 0.6 or more, 0.7 or more, or 0.8 or more. In some example embodiments, the content of Ni may be 0.8 to 0.95, 0.82 to 0.95, 0.83 to 0.95, 0.84 to 0.95, 0.85 to 0.95, or 0.88 to 0.95.

In some example embodiments, the cathode active material may include a lithium cobalt oxide-based active material, a lithium manganese oxide-based active material, a lithium nickel oxide-based active material, or a lithium iron phosphate (LFP)-based active material (for example, $LiFePO_4$).

In some example embodiments, the cathode active material may include, for example, a Mn-rich-based active material having a chemical structure or crystal structure represented by Chemical Formula 2, a Li rich layered oxide (LLO) /over lithiated oxide (OLO)-based active material, or a Co-less-based active material:

$$[\text{Chemical Formula 2}] \qquad p[Li_2MnO_3] \cdot (1\text{-}p) [Li_qJO_2]$$

wherein $0<p<1$ and $0.9 \leq q \leq 1.2$, and J includes at least one element of Mn, Ni, Co, Fe, Cr, V, Cu, Zn, Ti, Al, Mg, and B.

A separator may be interposed between the cathode and the anode. The separator may be formed so that an electrical short circuit between the cathode and the anode is prevented, and an ion flow occurs. According to an example embodiment, the separator may have a thickness of 10 $\mu$m to 20 $\mu$m, but the present disclosure is not limited thereto.

For example, the separator may include a porous polymer film or a porous non-woven fabric. The porous polymer film may include a polyolefin-based polymer such as an ethylene polymer, a propylene polymer, an ethylene/butene copolymer, an ethylene/hexene copolymer, and an ethylene/methacrylate copolymer. The porous non-woven fabric may include high-melting-point glass fiber, polyethylene terephthalate fiber, and the like. The separator may include ceramic-based materials. For example, inorganic particles may be coated on the polymer film or dispersed in the polymer film to improve heat resistance.

The separator may have a single-layer or multilayer structure including the polymer film and/or the non-woven fabric described above.

Since the lithium secondary battery as described above has all excellent fast charging characteristics, high capacity characteristics, life characteristics, resistance characteristics, and the like, it may have excellent utility as a power source for an electric vehicle (EV) and the like.

Mode for the Invention

**Examples and Comparative Examples**

1) Carbon-based active material

A first artificial graphite, a first natural graphite, and a second artificial graphite for application as carbon-based active materials of the examples and the comparative examples were prepared, respectively, and the first artificial graphite, the first natural graphite, and the second artificial graphite as a first carbon-based active material and a second carbon-based active material were applied, respectively, differently from the examples and the comparative examples. The physical properties of the first artificial graphite, the first natural graphite, and the second artificial graphite are shown in the following Table 1.

At this time, the peak intensity value for calculating the crystal orientation index (OI) value of the carbon-based active material was measured using XRD equipment (PANalytical, Empyrean) with a CuK$\alpha$ ray as a target ray. At this time, the measurement conditions were 2θ = 10° to 80°, scan speed (°/S) = 3, step size: 0.025°/step.

In addition, the Raman R value of the carbon-based active material was calculated from the Raman spectrum measured using a Raman spectrometer (RENISHAW, Invia). At this time, $I_D$ was based on the peak intensity value at 1360 cm$^{-1}$ in the spectrum measured at an excited wavelength of 532 nm, using the Raman spectrometer, and $I_G$ was based on the peak intensity value at 1580 cm$^{-1}$ in the spectrum measured at an excited wavelength of 532 nm, using the Raman spectrometer. In addition, as the measurement conditions, the number of scans was set to 3, and a laser exposure time was set to 30 seconds.

[Table 1]

| | Peak intensity of (004) plane ($I_{(004)}$) | Peak intensity of (110) plane ($I_{(110)}$) | Crystal orientation index (OI) ($I_{(004)}/I_{(110)}$) | Raman R value ($I_D/I_G$) |
|---|---|---|---|---|
| First artificial graphite | 14091 | 4007 | 3.52 | 0.13 |
| First natural graphite | 5488 | 13446 | 2.45 | 0.34 |

(continued)

| | Peak intensity of (004) plane (I$_{(004)}$) | Peak intensity of (110) plane (I$_{(110)}$) | Crystal orientation index (OI) (I$_{(004)}$/I$_{(110)}$) | Raman R value (I$_D$/I$_G$) |
|---|---|---|---|---|
| Second artificial graphite | 8707 | 4170 | 2.09 | 0.10 |

2) Manufacture of anode

A first anode slurry including the first carbon-based active material, the binder, and the first conductive material; and a second anode slurry including a second carbon-based active material, a silicon-based active material, a binder, and a second conductive material were prepared, respectively. Thereafter, the first anode slurry was applied on a copper foil as an anode current collector and then dried at 80°C to form a first anode mixture layer, and the second anode slurry was applied on the first anode mixture layer and then dried at 80°C to form a second anode mixture layer, thereby manufacturing the anodes for a lithium secondary battery of the examples and the comparative examples. At this time, a loaded weight (LW) ratio between the first anode mixture layer and the second anode mixture layer was applied as 5:5.

At this time, the artificial graphite and the natural graphite were differently applied depending on the examples and the comparative examples as the first carbon-based active material and the second carbon-based active material. Specifically, whether the first anode mixture layer included artificial graphite and natural graphite, whether the second anode mixture layer included artificial graphite and natural graphite, the content ratio between artificial graphite and natural graphite in the first anode mixture layer, and the content ratio between artificial graphite and natural graphite in the second anode mixture layer are shown in the following Table 2. In addition, single-walled carbon nanotubes (SWCNT) and multi-walled carbon nanotubes (MWCNT) were differently applied as the first conductive material and the second conductive material, depending on the examples and the comparative examples, a silicon oxide-based active material (SiO$_x$; 0<x<2) was applied as the silicon-based active material, and carboxymethyl cellulose (CMC) and styrene-butadiene rubber (SBR) were applied as a binder. In addition, the content of the first carbon-based active material in the first anode mixture layer was 95.8 wt%, the content of the second carbon-based active material in the second anode mixture layer was 86 wt%, the content of the binder in the first anode mixture layer was 3.7 wt%, and the contents of the silicon-based active material and the binder in the second anode mixture layer were 12 wt% and 1.9 wt%, respectively.

The crystal orientation indexes (OI), the Raman R values of the first anode mixture layer and the second anode mixture layer, the Raman R values of the first conductive material and the second conductive material, and the contents of the first conductive material and the second conductive material, of the examples and the comparative examples are shown in the following Table 3, respectively.

At this time, the peak intensity value for calculating the crystal orientation index (OI) value of the first anode mixture layer and the second anode mixture layer was measured using XRD equipment (PANalytical, Empyrean) with a CuKα ray as a target ray. At this time, the measurement conditions were 2θ = 10° to 80°, scan speed (°/S) = 3, step size: 0.025°/step.

In addition, the Raman R values of the first anode mixture layer, the second anode mixture layer, and the conductive material were calculated from the Raman spectrum measured using a Raman spectrometer (RENISHAW, Invia). At this time, I$_D$ was based on the peak intensity value at 1360 cm$^{-1}$ in the spectrum measured at an excited wavelength of 532 nm, using the Raman spectrometer, and I$_G$ was based on the peak intensity value at 1580 cm$^{-1}$ in the spectrum measured at an excited wavelength of 532 nm, using the Raman spectrometer. In addition, as the measurement conditions, the number of scans was set to 3, and the laser exposure time was set to 30 seconds.

[Table 2]

| | First anode mixture layer | | | | Second anode mixture layer | | | |
|---|---|---|---|---|---|---|---|---|
| | Artificial graphite | Natural graphite | Weight ratio between artificial graphite and natural graphite | Whether artificial graphite was surface-coated | Artificial graphite | Natural graphite | Weight ratio between artificial graphite and natural graphite | Whether artificial graphite was surface-coated |
| Example 1 | ○ (First artificial graphite) | × | - | × | ○ (Second artificial graphite) | × | - | ○ |

(continued)

| | First anode mixture layer | | | | Second anode mixture layer | | | |
|---|---|---|---|---|---|---|---|---|
| | Artificial graphite | Natural graphite | Weight ratio between artificial graphite and natural graphite | Whether artificial graphite was surface-coated | Artificial graphite | Natural graphite | Weight ratio between artificial graphite and natural graphite | Whether artificial graphite was surface-coated |
| Example 2 | ○ (First artificial graphite) | ○ (First natural graphite) | 7:3 | × | ○ (Second artificial graphite) | × | - | ○ |
| Example 3 | ○ (Second artificial graphite) | × | - | × | ○ (Second artificial graphite) | × | - | ○ |
| Example 4 | ○ (First artificial graphite) | × | - | × | ○ (First artificial graphite) | × | - | × |
| Example 5 | ○ (First artificial graphite) | ○ (First natural graphite) | 3:7 | × | ○ (Second artificial graphite) | × | - | ○ |
| Example 6 | ○ (First artificial graphite) | ○ (First natural graphite) | 9:1 | × | ○ (Second artificial graphite) | × | - | ○ |
| Example 7 | ○ (First artificial graphite) | ○ (First natural graphite) | 7:3 | ○ | ○ (Second artificial graphite) | × | - | ○ |
| Comparative Example 1 | × | ○ (First natural graphite) | - | × | ○ (Second artificial graphite) | × | - | ○ |
| Comparative Example 2 | ○ (Second artificial graphite) | ○ (First natural graphite) | 7:3 | ○ | ○ (Second artificial graphite) | × | - | ○ |
| Comparative Example 3 | ○ (First artificial graphite) | × | - | × | ○ (Second artificial graphite) | ○ (First natural graphite) | 7:3 | ○ |

[Table 3]

| | First anode mixture layer | | | | Second anode mixture layer | | | |
|---|---|---|---|---|---|---|---|---|
| | Crystal orientati on index (OI) $(I_{(004)}/I_{(110)})$ | Raman R value $(I_D/I_G)$ | First conductive material | | Crystal orientation index (OI) $(I_{(004)}/I_{(110)})$ | Raman R value $(I_D/I_G)$ | Second conductive material | |
| | | | Raman R value $(I_D/I_G)$ | Conten t (wt%) | | | Raman R value $(I_D/I_G)$ | Conten t (wt%) |
| Example 1 | 15.55 | 0.25 | 0.35 | 0.5 | 4.24 | 0.29 | 0.02 | 0.1 |
| Example 2 | 13.00 | 0.19 | 0.35 | 0.5 | 4.24 | 0.29 | 0.02 | 0.1 |
| Example 3 | 4.55 | 0.15 | 0.35 | 0.5 | 4.24 | 0.29 | 0.02 | 0.1 |
| Example 4 | 12.91 | 0.28 | 0.35 | 0.5 | 10.39 | 0.31 | 0.02 | 0.1 |
| Example 5 | 8.34 | 0.13 | 0.35 | 0.5 | 4.24 | 0.29 | 0.02 | 0.1 |
| Example 6 | 23.00 | 0.29 | 0.35 | 0.5 | 4.24 | 0.29 | 0.02 | 0.1 |
| Example 7 | 12.00 | 0.14 | 0.35 | 0.5 | 0.56 | 0.54 | 0.02 | 0.1 |
| Comparati ve Example 1 | 9.32 | 0.38 | 0.35 | 0.5 | 4.24 | 0.28 | 0.02 | 0.1 |
| Comparati ve Example 2 | 9.78 | 0.3 | 0.35 | 0.5 | 4.24 | 0.26 | 0.02 | 0.1 |
| Comparati ve Example 3 | 12.91 | 0.28 | 0.35 | 0.5 | 8.51 | 0.19 | 0.02 | 0.1 |

2) Manufacture of a secondary battery

A slurry including Li $[Ni_{0.8}Co_{0.1}Mn_{0.1}]$ $O_2$ which is a Li-transition metal composite oxide was applied on an aluminum foil and dried to manufacture a cathode, a polyolefin separator was interposed between the cathode and the anode manufactured above to manufacture a secondary battery cell, which was then added to a pouch for a secondary battery, and then an electrolyte solution in which 1 M $LiPF_6$ was dissolved in a mixed solvent of ethylene carbonate (EC) and diethyl carbonate (DEC) was injected into the pouch for a secondary battery which was then sealed, thereby manufacturing a pouch-type lithium secondary battery. The manufactured pouch-type lithium secondary battery was applied as a secondary battery sample of the examples and the comparative examples.

3) Evaluation of energy density

Each anode and the same cathode were used in the manufactured secondary battery samples to manufacture pouch-type secondary batteries (cells) having a large capacity of 20 Ah or more, and then the batteries were charged at a constant current of 0.3 C until the voltage reached 4.2 V and then cut-off at a current of 0.05 C while maintaining 4.2 V in a constant current mode, thereby performing constant voltage charge. Thereafter, the batteries were discharged at a constant current of 0.3 C until the voltage reached 2.5 V to measure a discharge capacity (Ah) and energy (Wh), the volume of each battery in a 4.2 V charged state was measured to calculate a volume-energy density, and the results are shown in the following Table 4.

4) Evaluation of resistance characteristics

The secondary battery sample was set to SOC 50% at 25°C, and after a rest time of 1 hour, it was discharged at a current of 1 C for 10 seconds to measure a resistance characteristic, and the results are shown in Table 2. Specifically, the resistance value of the secondary sample was measured according to the following Equation 2, and the results are shown in Table 4:

[Equation 3]

$$R = (V_0 - V_1) / I$$

wherein R is a resistance value of a secondary battery, $V_0$ is a voltage of a secondary battery measured after setting SOC 50% at 25°C and spending a rest time of 1 hour, $V_1$ is a voltage of a secondary battery measured after discharging for 10 seconds at a current of 1 C, and I is a 1 C current value.

5) Evaluation of fast charging life characteristic

The secondary sample was charged at 25°C for 17 minutes in a range of SOC 8-80%, a cycle of discharging at 0.3 C was repeated 300 times, a discharge capacity retention rate to an initial discharge capacity was measured in %, and the results are shown in Table 4.

[Table 4]

|  | Energy density (Wh/L) | Resistance characteristic (mΩ) | Fast charging life characteristic (%) |
|---|---|---|---|
| Example 1 | 705 | 0.91 | 92.5 |
| Example 2 | 699 | 0.88 | 93.3 |
| Example 3 | 682 | 0.86 | 94.1 |
| Example 4 | 704 | 0.95 | 85.4 |
| Example 5 | 693 | 0.87 | 93.4 |
| Example 6 | 702 | 0.98 | 87.9 |
| Example 7 | 691 | 0.85 | 95.5 |
| Comparative Example 1 | 686 | 0.84 | 91.2 |
| Comparative Example 2 | 692 | 0.92 | 90.1 |
| Comparative Example 3 | 712 | 1.23 | 68.2 |

Referring to Tables 1 to 4, Comparative Examples 1 to 3 in which a low-density anode mixture layer having lower crystallinity and higher porosity (that is, anode mixture layer having a higher Raman R value) was disposed in the lower layer, and a high-density anode mixture layer having higher crystallinity and lower porosity (that is, anode mixture layer having a lower Raman R value) was disposed in the upper layer had inferior fast charging characteristic and the like.

However, Examples 1 to 7 in which a high-density anode mixture layer having higher crystallinity and lower porosity (that is, anode mixture layer having a lower Raman R value) was disposed in the lower layer, and a low-density anode mixture layer having lower crystallinity and higher porosity (that is, anode mixture layer having a higher Raman R value) was disposed in the upper layer secured excellent energy density and resistance characteristic and also had better fast charging life characteristics.

It is considered that in the anode having a multilayer structure, the lower layer included the high-density anode mixture layer having higher crystallinity and lower porosity to improve the energy density of the anode, and the upper layer included the low-density anode mixture layer having lower crystallinity and higher porosity so that lithium ions easily entered and exited, thereby improving the fast charging characteristic of the anode.

Meanwhile, referring to Examples 1 and 2, it was found that Example 2 including natural graphite had better energy density, resistance characteristic, fast charging life characteristic, and the like than Example 1 which did not include natural graphite. It is considered that the natural graphite improved the electrode adhesive strength and resistance characteristics of the first anode mixture layer.

In addition, it was shown that Example 3 having a lower OI value by the first anode mixture layer in the lower portion including the second artificial graphite and having a low orientation characteristic, had lower energy density than Examples 1 and 2. In addition, it was shown that Example 4 having a high OI value by the second anode mixture layer in the upper portion including the first artificial graphite which was not surface-coated and having a high orientation characteristic, had inferior fast charging performance to Examples 1 and 2.

Meanwhile, Example 5, having a higher content of first natural graphite than the first artificial graphite included in the first anode mixture layer in the lower portion had a low OI value of the first anode mixture layer and had a low orientation characteristic, and thus, showed low energy density. In addition, Example 6 having a higher content of the first artificial graphite than the first natural graphite included in the first anode mixture layer in the lower portion had a high OI value of the first anode mixture layer and had a high orientation characteristic, and thus, showed inferior fast charging performance. Further, Example 7 including surface-coated artificial graphite in both the first anode mixture layer and the second anode mixture layer had low OI values of the anode mixture layers and had a low orientation characteristic, and thus, showed low energy density.

Considering the results, when the high-density and high-orientation first anode mixture layer having higher crystallinity and lower porosity was disposed in the lower portion, the first anode mixture layer appropriately included a conductive material and the like having excellent dispersibility, and the low-density and low-orientation second anode mixture layer having lower crystallinity and higher porosity was disposed, and a conducing material and the like having excellent conductivity were appropriately included, as in Examples 1 and 2, an anode for a lithium secondary battery having all excellent energy density, resistance characteristic, fast charging characteristic, and the like, and a lithium secondary battery including the same may be provided.

Hereinabove, although the example embodiments of the present disclosure have been described in detail, they are only illustrative, and it will be appreciated by those skilled in the art that various modifications and other equivalent example embodiments are possible therefrom. Accordingly, the true technical protection scope of the present disclosure should be determined by the spirit of the appended claims.

The present disclosure may also relate to the following aspects:

Aspect 1) an anode for a lithium secondary battery includes: an anode current collector: a first anode mixture layer which is formed on at least one surface of the anode current collector and contains a first carbon-based active material; and a second anode mixture layer which is formed on the first anode mixture layer and contains a second carbon-based active material and a silicon-based active material, wherein the first anode mixture layer has a Raman R value according to the following Equation 1, which is smaller than that of the second anode mixture layer:

$$[Equation\ 1]$$
$$Raman\ R = I_D\ /\ I_G$$

wherein $I_D$ is a peak intensity value in an absorption region of 1350 to 1380 cm$^{-1}$, and $I_G$ is a peak intensity value in an absorption region of 1580 to 1600 cm$^{-1}$.

Aspect 2) According to Aspect 1, the first anode mixture layer may not include the silicon-based active material.

Aspect 3) According to Aspect 1 or 2, the first anode mixture layer may have an OI value according to the following Equation 2, which is larger than that of the second anode mixture layer:

$$[Equation\ 2]$$
$$OI = I_{004}\ /\ I_{110}$$

wherein OI is a crystal orientation index according to XRD measurement, $I_{004}$ is a peak intensity of a (004) plane in XRD measurement of the anode mixture layer, and $I_{110}$ is a peak intensity of a (110) plane in XRD measurement of the anode mixture layer.

Aspect 4) According to Aspect 3, the first anode mixture layer may have the OI value of 9 to 18.

Aspect 5) According to Aspect 3 or 4, the second anode mixture layer may have the OI value of 1 to 8.

Aspect 6) According to any one of Aspects 1 to 5, the first anode mixture layer may have the Raman R value of 0.15 to 0.27.

Aspect 7) According to any one of Aspects 1 to 6, the second anode mixture layer may have the Raman R value of 0.281 to 0.55.

Aspect 8) According to any one of Aspects 1 to 7, the first carbon-based active material and the second carbon-based active material may independently of each other include artificial graphite.

Aspect 9) According to any one of Aspects 1 to 8, the first carbon-based active material may further include natural graphite.

Aspect 10) According to any one of Aspects 1 to 9, the first carbon-based active material may not be surface-coated.

Aspect 11) According to any one of Aspects 1 to 10, the second carbon-based active material may be surface-coated with at least one selected from the group consisting of hard carbon, soft carbon, heavy oil, and pitch.

Aspect 12) A lithium secondary battery may include the anode for a lithium secondary battery according to any one of Aspects 1 to 11.

[Description of Reference Characters]

| | | | |
|---|---|---|---|
| 1: | Carbon-based active material | 2: | Basal plane |
| 3: | Edge plane | 10: | Anode current collector |
| 20: | Anode mixture layer | 21: | First anode mixture layer |
| 22: | Second anode mixture layer | 100: | Anode for lithium secondary battery |

Industrial Applicability

As described above, the characteristics of the present disclosure may be applied entirely or partly to the anode for a lithium secondary battery and the lithium secondary battery including the same.

**Claims**

1.  An anode for a lithium secondary battery comprising:

    an anode current collector;
    a first anode mixture layer which is formed on at least one surface of the anode current collector and includes a first carbon-based active material; and
    a second anode mixture layer which is formed on the first anode mixture layer and includes a second carbon-based active material and a silicon-based active material,
    wherein the first anode mixture layer has a Raman R value according to the following Equation 1, which is smaller than that of the second anode mixture layer:

$$[Equation\ 1]$$
$$Raman\ R = I_D\ /\ I_G$$

    wherein $I_D$ is a peak intensity value in an absorption region of 1350 to 1380 cm$^{-1}$, and $I_G$ is a peak intensity value in an absorption region of 1580 to 1600 cm$^{-1}$.

2.  The anode for a lithium secondary battery of claim 1, wherein the first anode mixture layer does not include the silicon-based active material.

3.  The anode for a lithium secondary battery of claim 1, wherein the first anode mixture layer has an OI value according to the following Equation 2, which is larger than that of the second anode mixture layer:

$$[Equation\ 2]$$
$$OI = I_{004}\ /\ I_{110}$$

    wherein OI is a crystal orientation index according to XRD measurement, $I_{004}$ is a peak intensity of a (004) plane in XRD measurement of the anode mixture layer, and $I_{110}$ is a peak intensity of a (110) plane in XRD measurement of the anode mixture layer.

4.  The anode for a lithium secondary battery of claim 3, wherein the first anode mixture layer has the OI value of 9 to 18.

5.  The anode for a lithium secondary battery of claim 3, wherein the second anode mixture layer has the OI value of 1 to 8.

6.  The anode for a lithium secondary battery of claim 1, wherein the first anode mixture layer has the Raman R value of 0.15 to 0.27.

7.  The anode for a lithium secondary battery of claim 1, wherein the second anode mixture layer has the Raman R value of 0.281 to 0.55.

8.  The anode for a lithium secondary battery of claim 1, wherein the first carbon-based active material and the second carbon-based active material independently of each other include artificial graphite.

9.  The anode for a lithium secondary battery of claim 6, wherein the first carbon-based active material further includes natural graphite.

10. The anode for a lithium secondary battery of claim 1, wherein the first carbon-based active material is not surface-coated.

11. The anode for a lithium secondary battery of claim 1, wherein the second carbon-based active material is surface-coated with at least one selected from the group consisting of hard carbon, soft carbon, heavy oil, and pitch.

12. A lithium secondary battery comprising the anode for a lithium secondary battery of any one of claims 1 to 11.

[FIG. 1]

[FIG. 2]

100

## INTERNATIONAL SEARCH REPORT

| International application No. |
| --- |
| **PCT/KR2024/016373** |

| A. | CLASSIFICATION OF SUBJECT MATTER |
| --- | --- |

**H01M 4/134**(2010.01)i; **H01M 4/131**(2010.01)i; **H01M 4/133**(2010.01)i; **H01M 4/36**(2006.01)i; **H01M 4/48**(2010.01)i;
**H01M 4/583**(2010.01)i; **H01M 4/62**(2006.01)i; **H01M 10/052**(2010.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/134(2010.01); C01B 32/05(2017.01); C01B 32/21(2017.01); H01M 10/052(2010.01); H01M 10/0525(2010.01);
H01M 4/13(2010.01); H01M 4/131(2010.01); H01M 4/133(2010.01); H01M 4/36(2006.01); H01M 4/583(2010.01);
H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 음극(anode), 탄소계 활물질(carbon active material), 라만 값(Raman value)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 7336725 B2 (PANASONIC IP MANAGEMENT CO., LTD.) 01 September 2023 (2023-09-01) See paragraphs [0026]-[0027] and [0029]; claim 1; and table 1. | 1-2,6-10,12 |
| Y | | 3-5,11 |
| Y | KR 10-2544496 B1 (LG ENERGY SOLUTION, LTD.) 20 June 2023 (2023-06-20) See claim 1. | 3-5 |
| Y | KR 10-2019-0115834 A (LG CHEM, LTD.) 14 October 2019 (2019-10-14) See claim 1. | 11 |
| A | KR 10-2022-0000607 A (SK ON CO., LTD.) 04 January 2022 (2022-01-04) See entire document. | 1-12 |

| ✓ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **31 January 2025** | **31 January 2025** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| PCT/KR2024/016373 |

**C.    DOCUMENTS CONSIDERED TO BE RELEVANT**

| Category* | Citation of document, with indication, where appropriate, of the relevant passages | Relevant to claim No. |
|---|---|---|
| A | KR 10-2022-0133624 A (SK ON CO., LTD.) 05 October 2022 (2022-10-05)<br>See entire document. | 1-12 |

Form PCT/ISA/210 (second sheet) (July 2022)

**INTERNATIONAL SEARCH REPORT**
Information on patent family members

International application No.

**PCT/KR2024/016373**

| Patent document cited in search report | | | Publication date (day/month/year) | Patent family member(s) | | | Publication date (day/month/year) |
|---|---|---|---|---|---|---|---|
| JP | 7336725 | B2 | 01 September 2023 | CN | 111194501 | A | 22 May 2020 |
| | | | | CN | 111194501 | B | 21 April 2023 |
| | | | | EP | 3761428 | A1 | 06 January 2021 |
| | | | | EP | 3761428 | A4 | 07 April 2021 |
| | | | | US | 2020-0403221 | A1 | 24 December 2020 |
| | | | | WO | 2019-167613 | A1 | 06 September 2019 |
| KR | 10-2544496 | B1 | 20 June 2023 | CN | 118541828 | A | 23 August 2024 |
| | | | | EP | 4447164 | A1 | 16 October 2024 |
| | | | | WO | 2024-136079 | A1 | 27 June 2024 |
| KR | 10-2019-0115834 | A | 14 October 2019 | CN | 111819717 | A | 23 October 2020 |
| | | | | CN | 111819717 | B | 27 June 2023 |
| | | | | EP | 3754763 | A1 | 23 December 2020 |
| | | | | EP | 3754763 | A4 | 28 April 2021 |
| | | | | EP | 3754763 | B1 | 27 December 2023 |
| | | | | KR | 10-2426797 | B1 | 29 July 2022 |
| | | | | US | 11799070 | B2 | 24 October 2023 |
| | | | | US | 2021-0126248 | A1 | 29 April 2021 |
| | | | | WO | 2019-194554 | A1 | 10 October 2019 |
| KR | 10-2022-0000607 | A | 04 January 2022 | CN | 113851608 | A | 28 December 2021 |
| | | | | US | 12040490 | B2 | 16 July 2024 |
| | | | | US | 2021-0408546 | A1 | 30 December 2021 |
| KR | 10-2022-0133624 | A | 05 October 2022 | CN | 115132969 | A | 30 September 2022 |
| | | | | CN | 115132969 | B | 12 December 2023 |
| | | | | CN | 117334839 | A | 02 January 2024 |
| | | | | EP | 4064383 | A1 | 28 September 2022 |
| | | | | EP | 4064383 | B1 | 05 July 2023 |
| | | | | EP | 4220752 | A2 | 02 August 2023 |
| | | | | EP | 4220752 | A3 | 09 August 2023 |
| | | | | KR | 10-2023-0127948 | A | 01 September 2023 |
| | | | | KR | 10-2570427 | B1 | 24 August 2023 |
| | | | | US | 2022-0310991 | A1 | 29 September 2022 |
| | | | | US | 2024-0405208 | A1 | 05 December 2024 |

Form PCT/ISA/210 (patent family annex) (July 2022)